# EUROPÄISCHE PATENTSCHRIFT

(11) **EP 4 461 594 B1**
(45) Veröffentlichungstag und Bekanntmachung des Hinweises auf die Patenterteilung: **08.04.2026**
(21) Anmeldenummer: 24169347.2
(22) Anmeldetag: 09.04.2024
(51) Int. Cl.: B60L 53/66, B60L 55/00

(54) **VERFAHREN ZUM BIDIREKTIONALEN ENERGIEAUSTAUSCH ZWISCHEN EINEM ELEKTROFAHRZEUG UND EINER LADESTATION UND ANORDNUNG**
METHOD FOR BIDIRECTIONAL ENERGY EXCHANGE BETWEEN AN ELECTRIC VEHICLE AND A CHARGING STATION AND ARRANGEMENT
PROCÉDÉ D'ÉCHANGE BIDIRECTIONNEL D'ÉNERGIE ENTRE UN VÉHICULE ÉLECTRIQUE ET UNE STATION DE CHARGE ET AGENCEMENT

(30) Priorität: 28.04.2023 DE 102023203953
(43) Veröffentlichungstag der Anmeldung: 13.11.2024
(73) Patentinhaber: VOLKSWAGEN AG, 38440 Wolfsburg (DE)
(72) Erfinder: Schwarze, Henrik, 39104 Magdeburg (DE); Baumann, Dr. Lars, 38106 Braunschweig (DE)

(56) Entgegenhaltungen:
- WO-A1-2021/148726
- ANONYMOUS: "ISO 15118-2 Protocol", 1 September 2024 (2024-09-01), pages 1 - 26, XP093207407, Retrieved from the Internet <URL:https://www.typhoon-hil.com/documentation/typhoon-hil-software-manual/References/iso15118_protocol.html> [retrieved on 20240923]
- "Road vehicles -- Vehicle-to-Grid Communication Interface -- Part 2: Network and application protocol requirements", 31 March 2014 (2014-03-31), pages 1 - 342, XP082071534, Retrieved from the Internet <URL:https://api.iec.ch/harmonized/publications/download/85294> [retrieved on 20140331]

## Beschreibung

Die Erfindung betrifft ein Verfahren zum bidirektionalen Energieaustausch zwischen einem Elektrofahrzeug und einer Ladestation und eine Anordnung.

Die Energiespeicher von Elektrofahrzeugen müssen an Ladestationen geladen werden. Grundsätzlich besteht auch die Möglichkeit, elektrische Energie aus dem Energiespeicher des Elektrofahrzeugs über die Ladestation in ein Versorgernetz einzuspeisen. Ein bidirektionales Laden (bzw. Entladen) ist mit dem Kommunikationsprotokoll gemäß ISO-15118-2 jedoch nicht möglich. Das Kommunikationsprotokoll stellt Mehrwertdienste (engl. Value Added Service, VAS) bereit, welche frei ausgestaltet werden können.

WO 2021/148726 A1 beschäftigt sich mit bidirektionalem Laden von Elektrofahrzeugen unter im Zusammenhang mit ISO-15118-2.

Der Erfindung liegt die Aufgabe zu Grunde, ein Verfahren zum bidirektionalen Energieaustausch zwischen einem Elektrofahrzeug und einer Ladestation und eine Anordnung hierfür zu schaffen.

Die Aufgabe wird erfindungsgemäß durch ein Verfahren mit den Merkmalen des Patentanspruchs 1 und eine Anordnung mit den Merkmalen des Patentanspruchs 10 gelöst. Vorteilhafte Ausgestaltungen der Erfindung ergeben sich aus den Unteransprüchen. Insbesondere wird ein Verfahren zum bidirektionalen Energieaustausch zwischen einem Elektrofahrzeug und einer Ladestation zur Verfügung gestellt, wobei mittels eines Mehrwertdienstes des ISO-15118-2-Kommunikationsprotokolls (gemäß der am Anmeldetag gültigen Fassung) mindestens ein ein Entladen oder Laden eines Energiespeichers einer Energieeinheit des Elektrofahrzeugs betreffender Parameter und/oder Befehl zwischen der Energieeinheit und der Ladestation und/oder zwischen der Ladestation und der Energieeinheit übermittelt wird, wobei die Ladestation das Entladen oder Laden unter Berücksichtigung des übermittelten mindestens einen Parameters und/oder Befehls durchführt.

Ferner wird insbesondere eine Anordnung geschaffen, umfassend eine Energieeinheit für ein Elektrofahrzeug, eine Ladestation und eine zwischen der Energieeinheit und der Ladestation ausgebildete elektrische Verbindung mit einer Kommunikationsverbindung gemäß dem ISO-15118-2-Kommunikationsprotokoll (gemäß der am Anmeldetag gültigen Fassung), wobei Kommunikationsschnittstellen der Energieeinheit und der Ladestation dazu eingerichtet sind, mittels eines Mehrwertdienstes des ISO-15118-2-Kommunikationsprotokolls mindestens ein ein Entladen oder Laden eines Energiespeichers der Energieeinheit betreffenden Parameter und/oder Befehl zwischen der Energieeinheit und der Ladestation und/oder zwischen der Ladestation und der Energieeinheit zu übermitteln, wobei die Ladestation dazu eingerichtet ist, das Entladen oder Laden des Energiespeichers der Energieeinheit unter Berücksichtigung des übermittelten mindestens einen Parameters und/oder Befehls durchzuführen.

Das Verfahren und die Anordnung ermöglichen einen bidirektionalen Energieaustausch auf Grundlage des ISO-15118-2-Kommunikationsprotokolls. Der bidirektionale Energieaustausch ist insbesondere ein DC-Energieaustausch, das heißt, der Energieaustausch erfolgt durch Entladen oder Laden mittels eines Gleichstroms. Dies wird erreicht, indem ein hierfür eingerichteter Mehrwertdienst (engl. Value Added Service, VAS) vorgesehen ist. Mittels des Mehrwertdienstes wird mindestens ein ein Entladen oder Laden eines Energiespeichers einer Energieeinheit des Elektrofahrzeugs betreffender Parameter und/oder Befehl zwischen der Energieeinheit und der Ladestation und/oder zwischen der Ladestation und der Energieeinheit übermittelt. Ferner ist die Ladestation dazu eingerichtet, das Entladen oder Laden des Energiespeichers der Energieeinheit des Elektrofahrzeugs unter Berücksichtigung des übermittelten mindestens einen Parameters und/oder Befehls durchzuführen. Das Verfahren und die Anordnung ermöglichen insbesondere einen Austausch von Parametern, welche die Rahmenbedingungen eines bidirektionalen Energieaustausches, insbesondere eines DC-Energieaustausches, vorgeben und/oder bestimmen, sodass ein solcher Energieaustausch insbesondere von der Energieeinheit zur Ladestation (oder von der Ladestation zur Energieeinheit des Elektrofahrzeugs) auch mit dem hierfür nicht eingerichteten ISO-15118-2-Kommunikationsprotokoll in abgestimmter Weise erfolgen kann.

Die Begriffe Entladen und Laden werden im Rahmen dieser Offenbarung insbesondere mit Bezug auf den Energiespeicher verwendet.

Es ist insbesondere vorgesehen, dass der Mehrwertdienst gemäß einer REST-(engl. Representational State Transfer)-Schnittstelle ausgebildet ist. Die bereitgestellten Dienste definieren hierbei eine Client-Server-Architektur zwischen der Energieeinheit und der Ladestation, wobei ein Datenaustausch statuslos (stateless) erfolgt. Die Kommunikationsschnittstelle der Ladestation implementiert hierbei insbesondere den Server, während die Kommunikationsschnittstelle der Energieeinheit des Elektrofahrzeugs insbesondere den Client implementiert. Jeglicher Datenaustausch wird hierbei insbesondere seitens der Energieeinheit des Elektrofahrzeugs initiiert.

Alle definierten Dienste des Mehrzweckdienstes werden insbesondere in Form eines Vehicle-to-Grid-(V2G)-Dienstes implementiert und gehören insbesondere zu einer existierenden High Level Communication-(HLC)-Session in dem V2G-Protokoll, wie dies gemäß ISO 15118-2 definiert ist. Die Dienste werden insbesondere aktiviert, nachdem die HLC-Session gestartet wurde und geschlossen, wenn die HLC-Session gestoppt wird.

In einer Ausführungsform ist vorgesehen, dass der mindestens eine Befehl eine Anforderung des bidirektionalen Energieaustauschs beinhaltet. Hierdurch kann nach einem Verbindungsaufbau zwischen dem Elektrofahrzeug und der Ladestation über das ISO-15118-2-Kommunikationsprotokoll ein bidirektionaler Energieaustausch veranlasst werden.

In einer Ausführungsform ist vorgesehen, dass der mindestens eine Parameter mindestens einen das Entladen oder Laden des Energiespeichers des Elektrofahrzeugs betreffenden aktuellen Grenzwert beinhaltet. Hierdurch kann insbesondere ein Wertebereich vorgegeben werden, innerhalb dessen ein (bidirektionaler) Energieaustausch erfolgen kann und/oder erfolgen soll.

In einer Ausführungsform ist vorgesehen, dass der mindestens eine Parameter und/oder Befehl regelmäßig nach Ablauf einer vorgegebenen Zeitdauer erneut bestimmt und/oder übermittelt wird. Hierdurch können, insbesondere auch während des Energieaustausches, aktuelle Werte für den mindestens einen Parameter, beispielsweise für aktuelle Grenzwerte übermittelt werden, sodass hierdurch auch ein geänderter Zustand der Energieeinheit und/oder ein geänderter Zustand der Ladestation bei laufendem Energieaustausch berücksichtigt werden können.

In einer Ausführungsform ist vorgesehen, dass die Ladestation der Energieeinheit ferner einen Verbindungsstatus übermittelt, wobei der Verbindungsstatus eine Information darüber beinhaltet, ob die Ladestation zum aktuellen Zeitpunkt mit einem Versorgernetz verbunden ist oder nicht. Hierdurch kann der Energieeinheit mitgeteilt werden, ob ein Energieaustausch mit dem Versorgernetz grundsätzlich möglich ist oder nicht. Der Verbindungsstatus umfasst beispielsweise die beiden Zustände "verbunden" und "nicht verbunden". Ferner kann der Verbindungsstatus auch abgestufte Werte beinhalten, welche beispielsweise einen Umfang bzw. eine zur Verfügung stehende Leistung bei einem möglichen Energieaustausch mit dem Versorgernetz kodieren können.

In einer Ausführungsform ist vorgesehen, dass ein Energiespeicher der Energieeinheit innerhalb eines bidirektional be- und entladbaren Ladezustandsbereichs zyklisch entladen und wieder geladen wird. Hierdurch kann der Energiespeicher als Zwischenspeicher von elektrischer Energie in eine größere Versorgerinfrastruktur eingebunden werden. Wird der Energiespeicher der Energieeinheit des Elektrofahrzeugs nicht benötigt, kann auf diese Weise eine zusätzliche Kapazität zur Zwischenspeicherung von elektrischer Energie geschaffen und bereitgestellt werden, beispielsweise um nachhaltig erzeugte elektrische Energie für Zeiträume zwischenzuspeichern und bereitzuhalten, in denen weniger oder keine erneuerbare Energieerzeugung möglich ist. Das zyklische Entladen und Laden kann hierzu insbesondere auch mehrmals durchgeführt werden.

In einer Ausführungsform ist vorgesehen, dass der mindestens eine Parameter, der von der Energieeinheit an die Ladestation übermittelt wird, zumindest eine der folgenden Größen umfasst, welche insbesondere Grenzwerte bilden: eine minimale Ladespannung, einen minimalen Ladestrom, einen maximalen Ladestrom, eine minimale Ladeleistung, eine maximale Ladeleistung, einen minimalen Entladestrom, einen maximalen Entladestrom, eine minimale Entladeleistung, eine maximale Entladeleistung, eine Energiemenge zum Erreichen eines Zielladezustands, eine Energiemenge zum Erreichen eines minimalen Ladezustands, eine Energiemenge zum Erreichen eines maximalen Ladezustands, eine zum Entladen zur Verfügung stehende Energiemenge bis ein vorgegebener Ladezustandsbereich (minimaler Ladezustand/SOC bis maximaler Ladezustand/SOC) für das zyklische Entladen und Laden verlassen wird, eine zu ladende Energiemenge bis ein vorgegebener Ladezustandsbereich für das zyklische Entladen und Laden erreicht wird, einen Zielladezustand. Durch diese Größen kann das Entladen und Laden insbesondere gezielt gesteuert werden.

In einer Ausführungsform ist vorgesehen, dass der mindestens eine Parameter, der von der Ladestation an die Energieeinheit übermittelt wird, zumindest eine der folgenden Größen umfasst, welche insbesondere Grenzwerte bilden: einen minimal möglichen Entladestrom der Ladestation, einen maximal möglichen Entladestrom der Ladestation, eine maximal mögliche Entladeleistung der Ladestation. Durch diese Größen kann insbesondere das Entladen des Energiespeichers und Einspeisen in einer Versorgernetz gezielt gesteuert werden.

In einer Ausführungsform ist vorgesehen, dass vor dem Übermitteln des mindestens einen Parameters und/oder Befehls fahrzeugseitig eine Verfügbarkeit des Mehrwertdienstes und/oder eine Version des Mehrwertdienstes bei der Ladestation abgefragt wird, wobei das Übermitteln nur erfolgt, wenn der Mehrwertdienst bereitgestellt wird und/oder eine vorgegebene Version bereitgestellt werden kann. Hierdurch kann eine Ladestation auf das Vorhandensein und eine Eignung zum bidirektionalen Energieaustausch mittels des Mehrwertdienstes geprüft werden.

In einer Ausführungsform ist vorgesehen, dass der bidirektionale Energieaustausch beendet wird, wenn mindestens eine Abbruchbedingung erfüllt ist. Eine solche Abbruchbedingung kann beispielsweise ein entsprechender Befehl zum Beenden des Energieaustausches sein, der von einer Batteriesteuerung, einer Fahrzeugsteuerung und/oder von einem Nutzer ausgelöst wird. Ferner kann eine Abbruchbedingung ein Erreichen eines vorgegebenen Abfahrtzeitpunktes sein. Ferner kann die Abbruchbedingung auch ausgehend von dem mindestens einen Parameter vorgegeben und überprüft werden, beispielsweise ausgehend von einem Zielladezustand für den Energiespeicher.

Weitere Merkmale zur Ausgestaltung der Anordnung ergeben sich aus der Beschreibung von Ausgestaltungen des Verfahrens. Die Vorteile der Anordnung sind hierbei jeweils die gleichen wie bei den Ausgestaltungen des Verfahrens.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Anordnung;
- Fig. 2: ein schematisches Ablaufdiagramm einer beispielhaften Ausführungsform des Verfahrens zum bidirektionalen Energieaustausch zwischen einem Elektrofahrzeug und einer Ladestation.

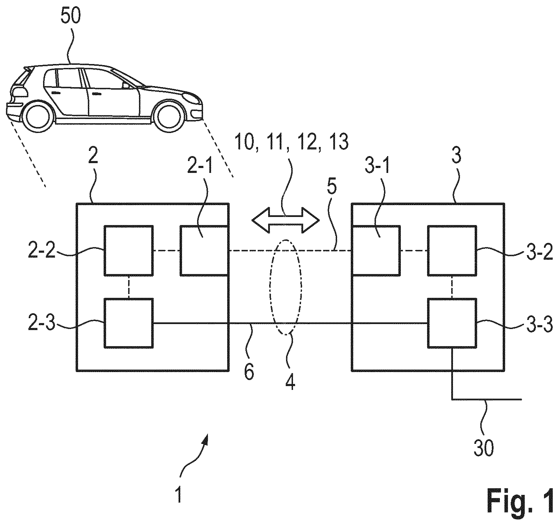

Die Fig. 1 zeigt eine schematische Darstellung einer Ausführungsform der Anordnung 1. Die Anordnung 1 ist insbesondere dazu eingerichtet, das in dieser Offenbarung beschriebene Verfahren auszuführen. Die Anordnung 1 umfasst eine Energieeinheit 2 für ein Elektrofahrzeug 50, eine Ladestation 3 und eine zwischen der Energieeinheit 2 und der Ladestation 3 ausgebildete elektrische Verbindung 4 mit einer Kommunikationsverbindung 5 gemäß dem ISO-15118-2-Kommunikationsprotokoll und einer Hochvolt-Verbindung 6 (insbesondere eine DC-Hochvoltverbindung). Die Energieeinheit 2 ist in dem Elektrofahrzeug 50 angeordnet und versorgt beispielsweise einen Traktionsantrieb des Elektrofahrzeugs 50.

Die Energieeinheit 2 weist eine Kommunikationsschnittstelle 2-1, eine Steuereinrichtung 2-2 und einen, insbesondere als Hochvoltbatterie ausgebildeten, elektrischen Energiespeicher 2-3 auf. Ferner kann die Energieeinheit 2 einen Stromrichter umfassen, welcher aus Gründen der Übersichtlichkeit nicht dargestellt ist.

Die Ladestation 3 weist eine Kommunikationsschnittstelle 3-1, eine Steuereinrichtung 3-2 und eine Anbindung 3-3 an ein Versorgernetz 30 auf. Ferner kann die Ladestation 3 einen Stromrichter umfassen, welcher aus Gründen der Übersichtlichkeit nicht dargestellt ist.

Die Kommunikationsschnittstellen 2-1, 3-1 der Energieeinheit 2 und der Ladestation 3 sind dazu eingerichtet, mittels eines Mehrwertdienstes des ISO-15118-2-Kommunikationsprotokolls mindestens ein ein Entladen oder Laden eines Energiespeichers 2-3 der Energieeinheit 2 betreffenden Parameter 10 und/oder Befehl 11 zwischen der Energieeinheit 2 und der Ladestation 3 und/oder zwischen der Ladestation 3 und der Energieeinheit 2 zu übermitteln.

Die Steuereinrichtungen 2-2, 3-2 sind insbesondere dazu eingerichtet, das Laden und Entladen (mit Bezug auf den Energiespeicher 2-3) zu steuern und/oder zu regeln und hierzu über die Kommunikationsschnittstellen 2-1, 3-1 miteinander zu kommunizieren. Die Steuereinrichtungen 2-2, 2-3 umfassen hierzu beispielsweise jeweils eine Recheneinrichtung (nicht gezeigt) und einen Speicher (nicht gezeigt).

Die Ladestation 3 ist dazu eingerichtet, das Entladen oder Laden des Energiespeichers 2-3 der Energieeinheit 2 unter Berücksichtigung des übermittelten mindestens einen Parameters 10 und/oder Befehls 11 durchzuführen.

Es kann vorgesehen sein, dass der mindestens eine Befehl 11 eine Anforderung des bidirektionalen Energieaustauschs beinhaltet.

Es kann vorgesehen sein, dass der mindestens eine Parameter 10 mindestens einen das Entladen oder Laden des Energiespeichers 2-3 des Elektrofahrzeugs 50 betreffenden aktuellen Grenzwert 12 beinhaltet.

Es kann vorgesehen sein, dass der mindestens eine Parameter 10 und/oder Befehl 11 regelmäßig nach Ablauf einer vorgegebenen Zeitdauer erneut bestimmt und/oder übermittelt wird. Die vorgegebene Zeitdauer kann beispielsweise im Bereich von einer bis zu wenigen Sekunden liegen.

Es kann vorgesehen sein, dass die Ladestation 3 der Energieeinheit 2 ferner einen Verbindungsstatus 13 übermittelt, wobei der Verbindungsstatus 13 eine Information darüber beinhaltet, ob die Ladestation 3 zum aktuellen Zeitpunkt mit dem Versorgernetz 30 verbunden ist oder nicht.

Es kann vorgesehen sein, dass der Energiespeicher 2-3 der Energieeinheit 2 innerhalb eines bidirektional be- und entladbaren Ladezustandsbereichs zyklisch entladen und wieder geladen wird.

Es kann vorgesehen sein, dass der mindestens eine Parameter 10, der von der Energieeinheit 2 an die Ladestation 3 übermittelt wird, zumindest eine der folgenden Größen umfasst, welche insbesondere Grenzwerte bilden: eine minimale Ladespannung, einen minimalen Ladestrom, einen maximalen Ladestrom, eine minimale Ladeleistung, eine maximale Ladeleistung, einen minimalen Entladestrom, einen maximalen Entladestrom, eine minimale Entladeleistung, eine maximale Entladeleistung, eine Energiemenge zum Erreichen eines Zielladezustands, eine Energiemenge zum Erreichen eines minimalen Ladezustands, eine Energiemenge zum Erreichen eines maximalen Ladezustands, eine zum Entladen zur Verfügung stehende Energiemenge bis ein vorgegebener Ladezustandsbereich für das zyklische Entladen und Laden verlassen wird, eine zu ladende Energiemenge bis ein vorgegebener Ladezustandsbereich für das zyklische Entladen und Laden erreicht wird, einen Zielladezustand.

Es kann vorgesehen sein, dass der mindestens eine Parameter 10, der von der Ladestation 2 an die Energieeinheit 3 übermittelt wird, zumindest eine der folgenden Größen umfasst, welche insbesondere Grenzwerte bilden: einen minimal möglichen Entladestrom der Ladestation, einen maximal möglichen Entladestrom der Ladestation, eine maximal mögliche Entladeleistung der Ladestation.

Es kann vorgesehen sein, dass vor dem Übermitteln des mindestens einen Parameters 10 und/oder Befehls 11 fahrzeugseitig eine Verfügbarkeit des Mehrwertdienstes und/oder eine Version des Mehrwertdienstes bei der Ladestation 3 abgefragt wird, wobei das Übermitteln nur erfolgt, wenn der Mehrwertdienst bereitgestellt wird und/oder eine vorgegebene Version bereitgestellt werden kann.

Es kann vorgesehen sein, dass der bidirektionale Energieaustausch beendet wird, wenn mindestens eine Abbruchbedingung erfüllt ist. Eine solche Abbruchbedingung kann beispielsweise ein entsprechender Befehl zum Beenden des Energieaustausches sein, der von einer Batteriesteuerung, einer Fahrzeugsteuerung und/oder von einem Nutzer ausgelöst wird. Ferner kann eine Abbruchbedingung ein Erreichen eines vorgegebenen Abfahrtzeitpunktes sein oder auch ausgehend von dem mindestens einen Parameter vorgegeben und überprüft werden, beispielsweise ausgehend von einem Zielladezustand für den Energiespeicher.

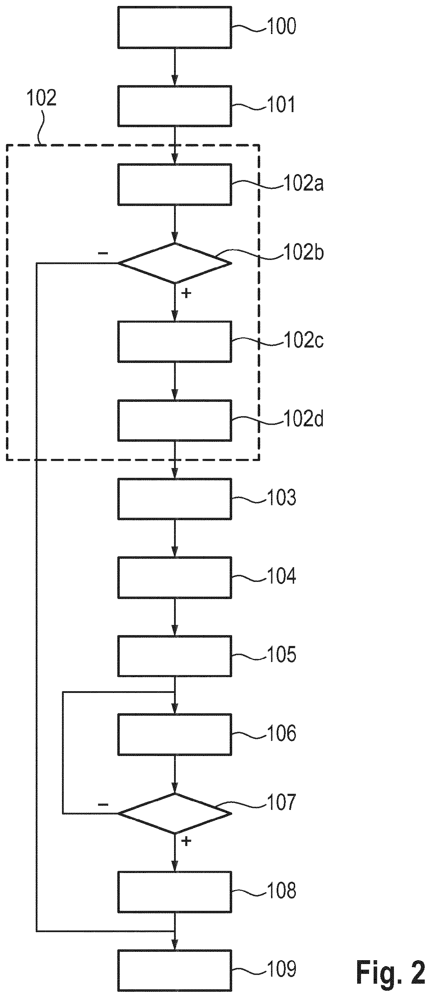

Die Fig. 2 zeigt ein schematisches Ablaufdiagramm einer beispielhaften Ausführungsform des Verfahrens zum bidirektionalen Energieaustausch zwischen einem Elektrofahrzeug und einer Ladestation, beispielsweise einer Wallbox.

In einem Verfahrensschritt 100 wird eine Ladestation mit einer Energieeinheit eines Elektrofahrzeugs verbunden. Dies erfolgt in an sich bekannter Weise mittels eines Ladekabels. Im Rahmen des Verbindens wird auch eine physische Kommunikationsverbindung hergestellt. Dies kann drahtgebunden oder drahtlos erfolgen (z.B. über Control Pilot (CP), Proximity Pilot (PP), Power Line Communication (PCL), Controller Area Network (CAN), WLAN,...).

In einem Verfahrensschritt 101 wird eine Kommunikation gemäß ISO 15118-2-Kommunikationsprotokoll gestartet.

In einem Verfahrensschritt 102 wird geprüft, ob die Energieeinheit des Elektrofahrzeugs und die Ladestation den gleichen Mehrwertdienst für einen bidirektionalen Energieaustausch nutzen. Hierzu meldet die Ladestation der Energieeinheit in einem Verfahrensschritt 102a, dass der Mehrwertdienst für bidirektionalen Energieaustausch unterstützt wird. Ferner wird eine Versionsnummer des Mehrwertdienstes übermittelt. In einem Verfahrensschritt 102b wird auf Seiten der Energieeinheit überprüft, ob die gleiche Version unterstützt wird. Ist dies nicht der Fall, so wird der Mehrwertdienst nicht gestartet und in einem Verfahrensschritt 109 wird die normale ISO-15118-2-Kommunkation fortgesetzt. Ist dies hingegen der Fall, so wird der Mehrwertdienst in einem Verfahrensschritt 102c von der Energieeinheit bei der Ladestation gebucht. In einem Verfahrensschritt 102d wird der Mehrwertdienst von der Ladestation zugelassen.

In einem Verfahrensschritt 103 wird mindestens ein ein Entladen oder Laden des Energiespeichers der Energieeinheit des Elektrofahrzeugs betreffender Parameter und/oder Befehl zwischen der Energieeinheit und der Ladestation und/oder zwischen der Ladestation und der Energieeinheit übermittelt. Insbesondere ist vorgesehen, dass der mindestens eine Parameter mindestens einen das Entladen oder Laden des Energiespeichers des Elektrofahrzeugs betreffenden aktuellen Grenzwert beinhaltet. Insbesondere werden mehrere aktuelle Grenzwerte übermittelt.

Insbesondere kann vorgesehen sein, dass der mindestens eine Parameter, der von der Energieeinheit an die Ladestation übermittelt wird, zumindest eine der folgenden Größen umfasst, welche insbesondere Grenzwerte bilden: eine minimale Ladespannung, einen minimalen Ladestrom, einen maximalen Ladestrom, eine minimale Ladeleistung, eine maximale Ladeleistung, einen minimalen Entladestrom, einen maximalen Entladestrom, eine minimale Entladeleistung, eine maximale Entladeleistung, eine Energiemenge zum Erreichen eines Zielladezustands, eine Energiemenge zum Erreichen eines minimalen Ladezustands, eine Energiemenge zum Erreichen eines maximalen Ladezustands, eine zum Entladen zur Verfügung stehende Energiemenge bis ein vorgegebener Ladezustandsbereich für das zyklische Entladen und Laden verlassen wird, eine zu ladende Energiemenge bis ein vorgegebener Ladezustandsbereich für das zyklische Entladen und Laden erreicht wird, einen Zielladezustand.

Ferner kann insbesondere vorgesehen sein, dass der mindestens eine Parameter, der von der Ladestation an die Energieeinheit übermittelt wird, zumindest eine der folgenden Größen umfasst, welche insbesondere Grenzwerte bilden: einen minimal möglichen Entladestrom der Ladestation, einen maximal möglichen Entladestrom der Ladestation, eine maximal mögliche Entladeleistung der Ladestation.

In einem Verfahrensschritt 104 fordert die Energieeinheit mittels eines Befehls den bidirektionalen Energieaustausch an. Dies aktiviert den bidirektionalen Energieaustausch.

In einem Verfahrensschritt 105 startet die Ladestation das Laden oder Entladen des Energiespeichers der Energieeinheit des Elektrofahrzeugs innerhalb der vorgegebenen aktuellen Grenzwerte. Hierzu kann insbesondere ein Stromrichter, insbesondere ein AC/DC-Wandler und/oder ein DC/AC-Wandler, der Ladestation entsprechend angesteuert werden. Ferner kann auch ein Stromrichter der Energieeinheit entsprechend angesteuert werden.

Beispielsweise kann ein Entladen des Energiespeichers mit einem maximalen Entladestrom erfolgen. Alternativ kann auch ein Laden des Energiespeichers mit einem maximalen Ladestrom erfolgen. Weitere Parameter bzw. Grenzwerte, die übermittelt und berücksichtigt werden können, wurden voranstehend bereits aufgelistet.

In einem Verfahrensschritt 106 werden während des Ladens oder Entladens aktuelle Grenzwerte erneut ermittelt und jeweils übermittelt. Hierbei ist vorgesehen, dass die aktuellen Grenzwerte regelmäßig nach Ablauf einer vorgegebenen Zeitdauer erneut bestimmt und/oder übermittelt werden.

In Verfahrensschritt 107 wird überprüft, ob mindestens eine Abbruchbedingung erfüllt ist. Eine solche Abbruchbedingung kann beispielsweise ein entsprechender Befehl zum Beenden des Energieaustausches sein, der von einer Batteriesteuerung, einer Fahrzeugsteuerung und/oder von einem Nutzer ausgelöst wird. Ferner kann eine Abbruchbedingung ein Erreichen eines vorgegebenen Abfahrtzeitpunktes sein. Ferner kann die Abbruchbedingung auch ausgehend von dem mindestens einen Parameter insbesondere von mindestens einem Grenzwert, vorgegeben und überprüft werden, beispielsweise ausgehend von einem Zielladezustand für den Energiespeicher.

Ergibt das Überprüfen, dass die mindestens eine Abbruchbedingung nicht vorliegt, so wird zu Verfahrensschritt 106 gesprungen. Ergibt das Überprüfen hingegen, dass die mindestens eine Abbruchbedingung vorliegt, so wird der Mehrwertdienst in einem Verfahrensschritt 108 beendet.

In einem Verfahrensschritt 109 wird nach dem Beenden des Mehrwertdienstes in die normale ISO-15118-2-Kommunikation zurückgewechselt.

### Bezugszeichenliste

- 1: Anordnung
- 2: Energieeinheit
- 2-1: Kommunikationsschnittstelle
- 2-2: Steuereinrichtung
- 2-3: elektrischer Energiespeicher (Hochvoltbatterie)
- 3: Ladestation
- 3-1: Kommunikationsschnittstelle
- 3-2: Steuereinrichtung
- 3-3: Anbindung an Versorgernetz
- 4: elektrische Verbindung
- 5: Kommunikationsverbindung
- 6: Hochvolt-Verbindung
- 10: Parameter
- 11: Befehl
- 12: aktueller Grenzwert
- 13: Verbindungsstatus
- 30: Versorgernetz
- 50: Elektrofahrzeug
- 100-109: Verfahrensschritte

## Patentansprüche

1. Verfahren zum bidirektionalen Energieaustausch zwischen einem Elektrofahrzeug (50) und einer Ladestation (3),
wobei die Ladestation das Entladen oder Laden unter Berücksichtigung mindestens eines übermittelten Parameters und/oder Befehls durchführt,
**dadurch gekennzeichnet, dass** mittels eines Mehrwertdienstes des ISO-15118-2-Kommunikationsprotokolls mindestens ein ein Entladen oder Laden eines Energiespeichers (2-3) einer Energieeinheit (2) des Elektrofahrzeugs (50) betreffender Parameter (10) und/oder Befehl (11) zwischen der Energieeinheit (2) und der Ladestation (3) und/oder zwischen der Ladestation (3) und der Energieeinheit (2) übermittelt wird,

2. Verfahren nach Anspruch 1, **dadurch gekennzeichnet, dass** der mindestens eine Befehl (10) eine Anforderung des bidirektionalen Energieaustauschs beinhaltet.

3. Verfahren nach Anspruch 1 oder 2, **dadurch gekennzeichnet, dass** der mindestens eine Parameter (10) mindestens einen das Entladen oder Laden des Energiespeichers (2-3) des Elektrofahrzeugs (50) betreffenden aktuellen Grenzwert (12) beinhaltet.

4. Verfahren nach einem der vorangegangenen Ansprüche, **dadurch gekennzeichnet, dass** der mindestens eine Parameter (10) und/oder Befehl (11) regelmäßig nach Ablauf einer vorgegebenen Zeitdauer erneut bestimmt und/oder übermittelt wird.

5. Verfahren nach einem der vorangegangenen Ansprüche, **dadurch gekennzeichnet, dass** die Ladestation (3) der Energieeinheit (2) ferner einen Verbindungsstatus (13) übermittelt, wobei der Verbindungsstatus (13) einer Information darüber beinhaltet, ob die Ladestation (3) zum aktuellen Zeitpunkt mit einem Versorgernetz (30) verbunden ist oder nicht.

6. Verfahren nach einem der vorangegangenen Ansprüche, **dadurch gekennzeichnet, dass** der Energiespeicher (2-3) der Energieeinheit (2) innerhalb eines bidirektional be- und entladbaren Ladezustandsbereichs zyklisch entladen und wieder geladen wird.

7. Verfahren nach einem der vorangegangenen Ansprüche, **dadurch gekennzeichnet, dass** der mindestens eine Parameter (10), der von der Energieeinheit (2) an die Ladestation (3) übermittelt wird, zumindest eine der folgenden Größen umfasst: eine minimale Ladespannung, einen minimalen Ladestrom, einen maximalen Ladestrom, eine minimale Ladeleistung, eine maximale Ladeleistung, einen minimalen Entladestrom, einen maximalen Entladestrom, eine minimale Entladeleistung, eine maximale Entladeleistung, eine Energiemenge zum Erreichen eines Zielladezustands, eine Energiemenge zum Erreichen eines minimalen Ladezustands, eine Energiemenge zum Erreichen eines maximalen Ladezustands, eine zum Entladen zur Verfügung stehende Energiemenge bis ein vorgegebener Ladezustandsbereich für das zyklische Entladen und Laden verlassen wird, eine zu ladende Energiemenge bis ein vorgegebener Ladezustandsbereich für das zyklische Entladen und Laden erreicht wird, einen Zielladezustand.

8. Verfahren nach einem der vorangegangenen Ansprüche, **dadurch gekennzeichnet, dass** der mindestens eine Parameter (10), der von der Ladestation (3) an die Energieeinheit (2) übermittelt wird, zumindest eine der folgenden Größen umfasst: einen minimal möglichen Entladestrom der Ladestation (3), einen maximal möglichen Entladestrom der Ladestation (3), eine maximal mögliche Entladeleistung der Ladestation (3).

9. Verfahren nach einem der vorangegangenen Ansprüche, **dadurch gekennzeichnet, dass** vor dem Übermitteln des mindestens einen Parameters (10) und/oder Befehls (11) fahrzeugseitig eine Verfügbarkeit des Mehrwertdienstes und/oder eine Version des Mehrwertdienstes bei der Ladestation (3) abgefragt wird, wobei das Übermitteln nur erfolgt, wenn der Mehrwertdienst bereitgestellt wird und/oder eine vorgegebene Version bereitgestellt werden kann.

10. Anordnung, umfassend:
eine Energieeinheit für ein Elektrofahrzeug,
eine Ladestation, und
eine zwischen der Energieeinheit und der Ladestation ausgebildete elektrische Verbindung mit einer Kommunikationsverbindung gemäß dem ISO-15118-2-Kommunikationsprotokoll,
wobei die Ladestation dazu eingerichtet ist, das Entladen oder Laden des Energiespeichers der Energieeinheit unter Berücksichtigung mindestens eines übermittelten Parameters und/oder Befehls durchzuführen,
**dadurch gekennzeichnet, dass** Kommunikationsschnittstellen der Energieeinheit und der Ladestation dazu eingerichtet sind, mittels eines Mehrwertdienstes des ISO-15118-2-Kommunikationsprotokolls mindestens ein ein Entladen oder Laden eines Energiespeichers der Energieeinheit betreffenden Parameter und/oder Befehl zwischen der Energieeinheit und der Ladestation und/oder zwischen der Ladestation und der Energieeinheit zu übermitteln,

## Claims

1. Method for bidirectional energy exchange between an electric vehicle (50) and a charging station (3).
the charging station carrying out discharging or charging taking into account at least one transmitted parameter and/or command,
**characterized in that**
by means of a value-added service of the ISO-15118-2 communication protocol, at least one parameter (10) and/or command (11) relating to discharging or charging an energy storage device (2-3) of an energy unit (2) of the electric vehicle (50) is transmitted between the energy unit (2) and the charging station (3) and/or between the charging station (3) and the energy unit (2),

2. Method according to claim 1, **characterized in that** the at least one command (10) includes a requirement for bidirectional energy exchange.

3. Method according to claim 1 or claim 2, **characterized in that** the at least one parameter (10) includes at least one current limit value (12) relating to discharging or charging the energy storage device (2-3) of the electric vehicle (50).

4. Method according to any of the preceding claims, **characterized in that** the at least one parameter (10) and/or command (11) is regularly re-determined and/or re-transmitted after a specified amount of time has elapsed.

5. Method according to any of the preceding claims, **characterized in that** the charging station (3) of the energy unit (2) further transmits a connection status (13), the connection status (13) containing information about whether or not the charging station (3) is connected to a supply network (30) at the current point in time.

6. Method according to any of the preceding claims, **characterized in that** the energy storage device (2-3) of the energy unit (2) is cyclically discharged and recharged within a bidirectionally chargeable and dischargeable state of charge range.

7. Method according to any of the preceding claims, **characterized in that** the at least one parameter (10) transmitted from the energy unit (2) to the charging station (3) includes at least one of the following quantities: a minimum charging voltage, a minimum charging current, a maximum charging current, a minimum charging capacity, a maximum charging capacity, a minimum discharge current, a maximum discharge current, a minimum discharge capacity, a maximum discharge capacity, an amount of energy for reaching a target state of charge, an amount of energy for reaching a minimum state of charge, an amount of energy for reaching a maximum state of charge, an amount of energy available for discharging until a specified state of charge range for cyclical discharging and charging is left, an amount of energy to be charged until a specified state of charge range for cyclical discharging and charging is reached, a target state of charge.

8. Method according to any of the preceding claims, **characterized in that** the at least one parameter (10) transmitted from the charging station (3) to the energy unit (2) includes at least one of the following quantities: a minimum possible discharge current of the charging station (3), a maximum possible discharge current of the charging station (3), a maximum possible discharge capacity of the charging station (3).

9. Method according to any of the preceding claims, **characterized in that,** before the at least one parameter (10) and/or command (11) is transmitted, the vehicle queries the charging station (3) about the availability of the value-added service and/or a version of the value-added service, the transmission only taking place if the value-added service is provided and/or a specified version can be provided.

10. Assembly comprising:
an energy unit for an electric vehicle,
a charging station, and
an electrical connection formed between the energy unit and the charging station, having a communication link according to the ISO-15118-2 communication protocol,
the charging station being designed to carry out the discharging or charging of the energy storage device of the energy unit taking into account at least one transmitted parameter and/or command,
**characterized in that**
communication interfaces of the energy unit and the charging station are designed to transmit at least one parameter and/or command relating to discharging or charging an energy storage device of the energy unit between the energy unit and the charging station and/or between the charging station and the energy unit by means of a value-added service of the ISO-15118-2 communication protocol.

## Revendications

1. Procédé d'échange d'énergie bidirectionnel entre un véhicule électrique (50) et une station de recharge (3).
dans lequel la station de recharge effectue la décharge ou la charge en tenant compte d'au moins un paramètre et/ou une instruction transmis,
**caractérisé en ce que**
au moyen d'un service à valeur ajoutée du protocole de communication de la norme ISO-15118-2, au moins un paramètre (10) et/ou une instruction (11) concernant une décharge ou une charge d'un accumulateur d'énergie (2-3) d'une unité d'énergie (2) du véhicule électrique (50) sont transmis entre l'unité d'énergie (2) et la station de recharge (3) et/ou entre la station de recharge (3) et l'unité d'énergie (2),

2. Procédé selon la revendication 1, **caractérisé en ce que** l'au moins une instruction (10) comprend une demande d'échange d'énergie bidirectionnel.

3. Procédé selon la revendication 1 ou 2, **caractérisé en ce que** l'au moins un paramètre (10) comprend au moins une valeur limite actuelle (12) concernant la décharge ou la charge de l'accumulateur d'énergie (2-3) du véhicule électrique (50).

4. Procédé selon l'une des revendications précédentes,
**caractérisé en ce que** l'au moins un paramètre (10) et/ou une instruction (11) sont déterminés et/ou transmis de nouveau régulièrement après l'écoulement d'une durée prédéfinie.

5. Procédé selon l'une des revendications précédentes,
**caractérisé en ce que** la station de recharge (3) transmet en outre un état de connexion (13) à l'unité d'énergie (2), dans lequel l'état de connexion (13) comprend des informations indiquant si la station de recharge (3) est connectée ou non à un réseau d'alimentation (30) à l'instant actuel.

6. Procédé selon l'une des revendications précédentes,
**caractérisé en ce que** l'accumulateur d'énergie (2-3) de l'unité d'énergie (2) est déchargé et rechargé de manière cyclique à l'intérieur d'une plage d'état de charge pouvant être chargée et déchargée de manière bidirectionnelle.

7. Procédé selon l'une des revendications précédentes,
**caractérisé en ce que** l'au moins un paramètre (10) transmis par l'unité d'énergie (2) à la station de recharge (3) comprend au moins l'une des grandeurs suivantes : une tension de charge minimale, un courant de charge minimal, un courant de charge maximal, une puissance de charge minimale, une puissance de charge maximale, un courant de décharge minimal, un courant de décharge maximal, une puissance de décharge minimale, une puissance de décharge maximale, une quantité d'énergie pour atteindre un état de charge cible, une quantité d'énergie pour atteindre un état de charge minimal, une quantité d'énergie pour atteindre un état de charge maximal, une quantité d'énergie disponible pour la décharge jusqu'à ce qu'une plage d'état de charge prédéfinie pour la décharge et la charge cycliques soit quittée, une quantité d'énergie à charger jusqu'à ce qu'une plage d'état de charge prédéfinie pour la décharge et la charge cycliques soit atteinte, un état de charge cible.

8. Procédé selon l'une des revendications précédentes,
**caractérisé en ce que** l'au moins un paramètre (10) transmis par la station de recharge (3) à l'unité d'énergie (2) comprend au moins l'une des grandeurs suivantes : un courant de décharge minimal possible de la station de recharge (3), un courant de décharge maximal possible de la station de recharge (3), une puissance de décharge maximale possible de la station de recharge (3).

9. Procédé selon l'une des revendications précédentes, **caractérisé en ce qu'**avant la transmission de l'au moins un paramètre (10) et/ou une instruction (11), une disponibilité du service à valeur ajoutée et/ou une version du service à valeur ajoutée sont interrogées côté véhicule auprès de la station de recharge (3), dans lequel la transmission n'est effectuée que si le service à valeur ajoutée est mis à disposition et/ou si une version prédéfinie peut être mise à disposition.

10. Agencement, comprenant :
une unité d'énergie pour un véhicule électrique,
une station de recharge, et
une connexion électrique réalisée entre l'unité d'énergie et la station de recharge, comportant une connexion de communication conformément au protocole de communication de la norme ISO-15118-2,
dans lequel la station de recharge est configurée pour effectuer la décharge ou la charge de l'accumulateur d'énergie de l'unité d'énergie en tenant compte d'au moins un paramètre et/ou une instruction transmis,
**caractérisé en ce que**
des interfaces de communication de l'unité d'énergie et de la station de recharge sont configurées pour transmettre, au moyen d'un service à valeur ajoutée du protocole de communication de la norme ISO-15118-2, au moins un paramètre et/ou une instruction concernant une décharge ou une charge d'un accumulateur d'énergie de l'unité d'énergie entre l'unité d'énergie et la station de recharge et/ou entre la station de recharge et l'unité d'énergie.
